# NEW EUROPEAN PATENT SPECIFICATION

(11) **EP 0 575 861 B2**
(45) Date of publication and mention of the opposition decision: **31.03.1999**
(45) Mention of the grant of the patent: 14.08.1996
(21) Application number: 93109505.3
(22) Date of filing: 15.06.1993
(51) Int. Cl.: B60K 20/08, F16H 59/04, F16H 61/36

(54) **A gear control system for motor vehicles**
Getriebekontrollsystem für Kraftfahrzeuge
Système de commande de boîte de vitesse d'un véhicule à moteur

(30) Priority: 22.06.1992 IT TO920531
(43) Date of publication of application: 29.12.1993
(73) Proprietor: FIAT AUTO S.p.A., 10135 Torino (IT)
(72) Inventor: Castelli, Piero, I-10135 TORINO (IT); Baldino, Salvatore, I-10137 TORINO (IT)
(74) Representative: Bosotti, Luciano

(56) References cited:
- EP-A- 0 333 429
- EP-A- 0 565 400
- FR-A- 2 256 466
- GB-A- 2 035 477
- GB-B- 1 010 958
- JP-A- 6 015 723
- US-A- 2 821 090
- US-A- 2 964 964
- US-A- 4 712 640
- PATENT ABSTRACTS OF JAPAN vol. 8, no. 137 (P-282)26 June 1984 & JP-A-59 036 829 (CHIYUUOU HATSUJIYOU K.K.) 29 February 1984

## Description

The present invention relates to control systems for the gears of motor vehicles provided with a steering wheel and instrument panel.
In systems of this type, the control lever is conventionally positioned substantially vertical on the floor of the passenger compartment, that is at a lower level than the steering wheel and adjacent the driving seat, or it may be directly carried by the steering wheel support structure, and in this case it extends radially of this wheel.

The disadvantage of the former prior art arrangement is that, in use, operating the gear lever can be awkward and can also involve a safety risk as, owing to the distance between the lever and the steering wheel and the time therefore required to change gear, the driver frequently holds the steering wheel with only one hand.

The latter prior art arrangement reduces the disadvantage described above, as it is close to the steering wheel, but involves complications in mounting the gear lever and connecting it to the transmission means.

In particular, the invention relates to a control system of the type indicated in the pre-characterizing portion appended claim 1.

Control systems of this type are disclosed in US-A-2 964 964 and in US-A-2 821 090.

The object of the present invention is to provide a gear control system of the type described above which is free of the disadvantages typical of prior art arrangements.

According to the invention, this object is achieved by virtue of the features set forth in claim 1.

Thanks to this idea, the gear lever can be moved in a similar way to gear sticks positioned on the floor of the passenger compartment, but is more accessible as its distance from the steering wheel is comparable to that of radial levers associated with the steering column.

In a preferred embodiment, the operating lever support includes a plate for fixing it to the instrument panel and two walls projecting orthogonally of the plate between which a first support pin is fixed with a first coupling sleeve coaxially rotatably mounted thereon and bearing a second pin orthogonal to the first on which a second coupling sleeve is coaxially rotatably mounted and to which the control lever is fixed, which latter extends substantially orthogonal to the said first and second pins.

First and second arms are rigidly fixed to the control lever, substantially parallel to the first and second pins respectively, and control the engagement and selection of the gears by respective first and a second flexible cable transmissions.

The invention will now be described in detail with reference to the appended drawings, supplied purely as a non-limitative example, in which:

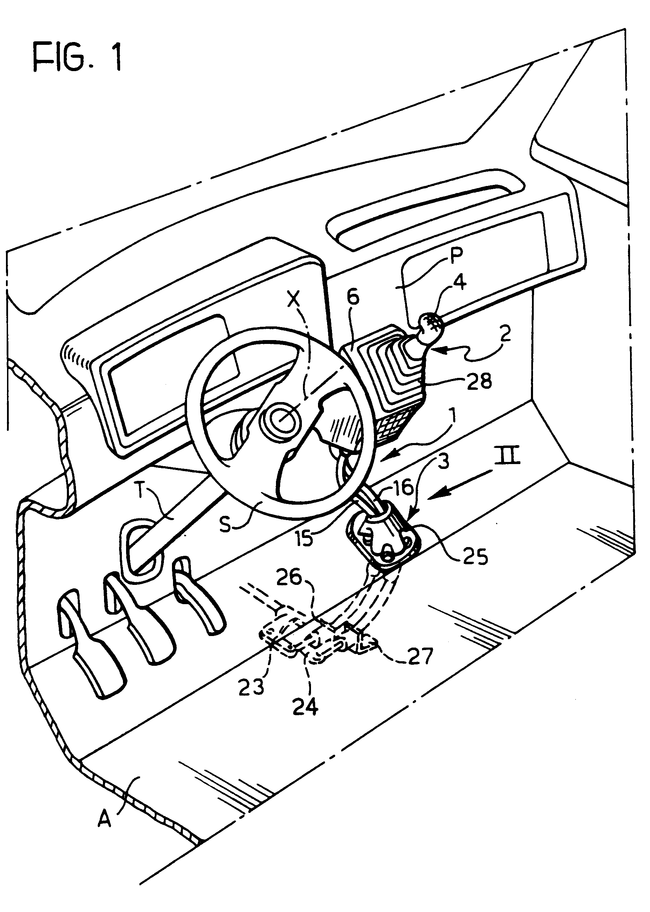

Figure 1 is a schematic perspective view of a control system according to the invention applied to a motor vehicle;
Figure 2 is a perspective view of the system, in partial cross-section and on an enlarged scale;
Figure 3 is an enlargement of the detail indicated by an arrow in Figure 2; and
Figure 4 is a cross-section taken on the line IV-IV of Figure 3.

In the drawings, the passenger compartment of a motor vehicle is generally indicated A, provided at the front with an instrument panel P and a steering wheel S, associated with a steering column T, the axis X of which is inclined upwardly.

The control system for the gears of a vehicle (not illustrated) is generally indicated 1 and essentially includes a control lever 2 fitted to the panel P alongside the steering wheel S and directed upwardly substantially parallel to the axis X of the latter, and a transmission system 3 operatively connected to the gearbox.

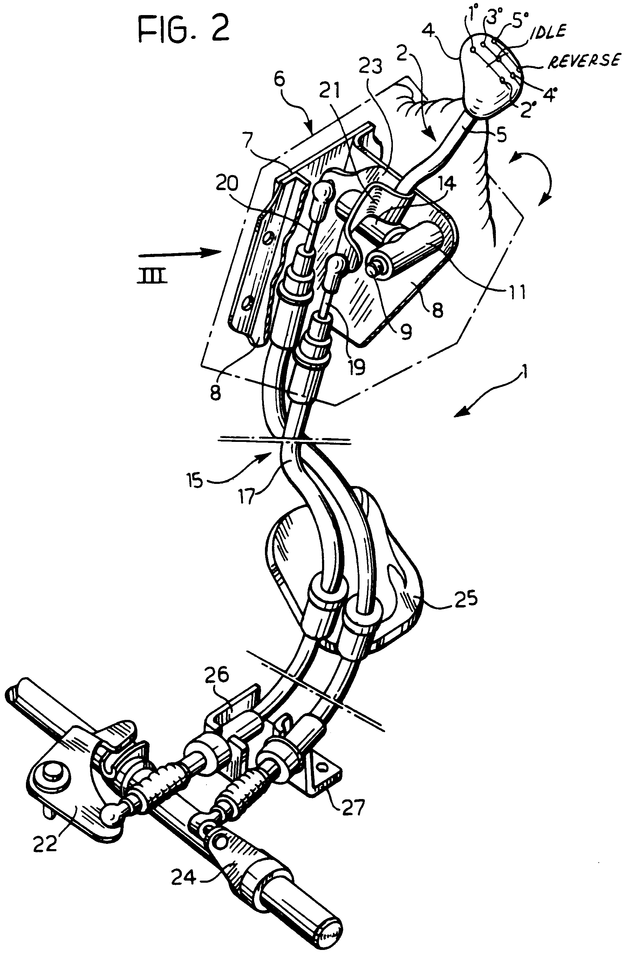

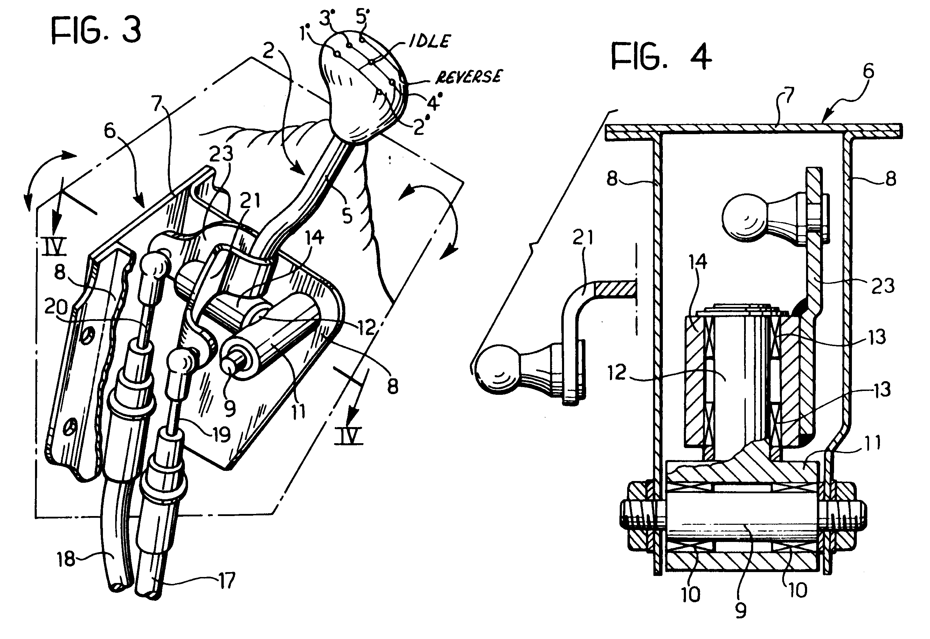

As illustrated in greater detail in Figures 2 to 4, the control lever 2 includes a knob 4 and a rod 5 connected at the bottom to a support 6 which includes a frontal plate 7 fixed, for example with screws, to the panel P and two support walls 8 themselves fixed at right angles to the frontal plate 7 and protruding towards the inside of the passenger compartment A.

A first pivot pin 9 is fixed between the two panels 8 and extends substantially parallel to the transverse axis of the vehicle with a first coupling sleeve 11 coaxially mounted on it for rotation on bearings 10.

The coupling sleeve 11 has an integral second pivot pin 12, at right angles to the first pin 9, on which a second coupling sleeve 14 is coaxially mounted for rotation by bearings 13, and the rod 5 of the command lever 2 is rigidly fixed to this second sleeve 14. The rod 5 is substantially at right angles to the pivot pins 9 and 12.

Mounted as described above, the control lever 2 may be moved both about the axis of the second pivot pin 12, for movements selecting the gears, and about the axis of the first pivot pin 9, for movements engaging the selected gears.

First and second flexible cable transmissions 15 and 16, each including a sheath 17, 18 and a cable 19, 20, of the type which operates both in tension and compression, are provided to control the engagement and selection respectively of the gears.

The cable 19 is connected at one end to an arm 21, fixed to the rod 5 of the control lever 2, extending substantially parallel to the first pin 9, and at the other end to a control member of the clutch 22 connected in conventional manner to the vehicle gearbox.

The other cable 20 is connected at one end to a second arm 23 also fixed to the rod 5 of the control lever 2 but extending substantially parallel to the second pin 12, and at the other end to a gear selection control member 24, also connected in a conventional manner to the vehicle gearbox.

The sheaths 17, 18 of the two transmissions 15, 16 are anchored to the vehicle's structure by a guide element 25 and respective end reaction elements 26, 27.

Finally a protective boot 28 of flexible plastics or elastomeric material is placed over the lever 2 between the knob 4 and the top of the support 6.

## Claims

1. A gearbox control system (1) for a motor vehicle having a steering when (S) and an instrument panel (P), of the type including a control lever (2) separated from the steering wheel support structure (T) and transmission means (15, 16) operatively connected to the lever (2) and to the gearbox, the control lever (2) being mounted on a support (6) fixed to the instrument panel (P) beside the steering wheel (S) and being directed upwardly substantially parallel to the axis (X) of the steering wheel (S),
characterised in that the lever (2) is rotatably mounted with respect to the support (6) about a first pivot pin (9) and a second pivot pin (12) at right angle between each other, first and second arms (21, 23) substantially parallel to the first pivot pin (9) and the second pivot pin (12), respectively, being rigidly fixed to the lever (2), said first (21) and second (23) arms controlling the engagement and the selection of the gears by respective transmission means (15, 16).

2. A system according to Claim 1, characterised in that the support (6) includes a plate (7) fixing it to the instrument panel (P) and two walls (8) projecting at right angles to the said fixing plate (6) between which is arranged the first pivot pin (9) on which is coaxially rotatably mounted a first coupling sleeve (11) carrying the second pivot pin (12) on which is coaxially rotatably mounted a second coupling sleeve (14) to which is fixed the control lever (2) extending substantially at right angles to the said first and second pivot pins (9, 12).

3. A system according to Claim 2, characterised in that the transmission means include a couple of flexible cable members (15, 16) each of which is connected to a respective pivot pin of the lever (2).

## Patentansprüche

1. Getriebesteuersystem (1) für ein Kraftfahrzeug mit einem Lenkrad (S) und einem Instrumentenbrett (P), umfassend einen von der Lenkradträgerkonstruktion (T) getrennten Steuerhebel (2) und den Hebel (2) mit dem Getriebe verbindende Übertragungsmittel (15, 16), wobei der Steuerhebel (2) auf einem Träger (6) gelagert ist, der am Instrumentenbrett (P) neben dem Lenkrad (S) befestigt und nach oben im wesentlichen parallel zur Achse (X) des Lenkrades (S) gerichtet ist, dadurch gekennzeichnet, daß der Hebel (2) inbezug auf den Träger (6) um einen ersten Drehzapfen (9) und einen zweiten Drehzapfen (12), die im rechten Winkel zueinander liegen, drehbar gelagert ist, wobei ein zum ersten Drehzapfen (9) bzw. zweiten Drehzapfen (12) im wesentlichen parallel verlaufender erster und zweiter Arm (21, 23) starr am Hebel (2) befestigt sind, wobei der erste (21) und der zweite (23) Arm das Einrücken und Wählen der Gänge durch jeweilige Übertragungsmittel (15, 16) steuern.

2. System nach Anspruch 1, dadurch gekennzeichnet, daß der Träger (6) eine Platte (7) für seine Befestigung am Instrumentenbrett (P) und zwei Wände (8) umfaßt, die sich im rechten Winkel zur genannten Befestigungsplatte (7) erstrecken und zwischen denen der erste Drehzapfen (9) angeordnet ist, auf dem eine erste Kupplungshülse (11) koaxial drehbar gelagert ist, die den zweiten Drehzapfen (12) trägt, auf dem eine zweite Kupplungshülse (14) koaxial drehbar gelagert ist, an welcher der sich zum ersten und zweiten Drehzapfen (9, 12) im wesentlichen im rechten Winkel erstreckende Steuerhebel (2) befestigt ist.

3. System nach Anspruch 2, dadurch gekennzeichnet, daß die Übertragungsmittel ein Paar biegsame Kabelelemente (15, 16) umfassen, die jeweils mit dem entsprechenden Drehzapfen des Hebels (2) verbunden sind.

## Revendications

1. Système (1) de commande de boîte de vitesses pour un véhicule automobile ayant un volant de direction (S) et un tableau de bord (P), du type comprenant un levier de commande (2) séparé de la structure (T) de support du volant de direction, et des moyens de transmission (15, 16) reliés fonctionnellement au levier (2) et à la boîte de vitesses, le levier de commande (2) étant monté sur un support (6) fixé au tableau de bord (P) à côté du volant de direction (S) et étant dirigé vers le haut, sensiblement parallèlement à l'axe (X) du volant de direction (S),
caractérisé en ce que le levier (2) est monté rotatif par rapport au support (6) autour d'un premier axe d'articulation (9) et d'un deuxième axe d'articulation (2) perpendiculaires entre eux, des premier et deuxième bras (21, 23) sensiblement parallèles au premier axe d'articulation (9) et au deuxième axe d'articulation (12) respectivement, étant rigidement fixés au levier (2) lesdits premier (21) et deuxième (23) bras commandant l'engagement et la sélection des rapports par les moyens de transmission respectifs (15, 16).

2. Système selon la revendication 1, caractérisé en ce que le support (6) comprend une plaque (7) qui le fixe au tableau de bord (P) et deux parois (8) qui font saillie perpendiculairement à ladite plaque de fixation (6) et entre lesquelles est agencé le premier axe d'articulation (9), sur lequel est monté rotatif coaxialement un premier manchon d'accouplement (11) qui porte le deuxième axe d'articulation (12), sur lequel est monté rotatif coaxialement un deuxième manchon d'accouplement (14) auquel est fixé le levier de commande (2) qui s'étend sensiblement perpendiculairement aux premier et deuxième axes d'articulation (9, 12).

3. Système selon la revendication 2, caractérisé en ce que les moyens de transmission comprennent deux organes à câbles flexibles (15, 16) dont chacun est relié à un axe d'articulation respectif du levier (2).
